# EUROPEAN PATENT SPECIFICATION

(11) **EP 4 108 405 B1**
(45) Date of publication and mention of the grant of the patent: **25.09.2024**
(21) Application number: 21181875.2
(22) Date of filing: 25.06.2021
(51) Int. Cl.: B29C 44/18, B29C 44/34, B29B 7/72, B29B 7/74, B29B 7/82

(54) **MACHINE FOR PRODUCING A FOAM-IN-BAG DUNNAGE MATERIAL**
MASCHINE ZUR HERSTELLUNG VON FÜLLSCHAUMBEUTEL-PACKMATERIAL
MACHINE DE PRODUCTION D'UN MATÉRIAU DE REMBOURRAGE DE MOUSSE DANS UN SAC

(43) Date of publication of application: 28.12.2022
(73) Proprietor: Storopack Hans Reichenecker GmbH, 72555 Metzingen (DE)
(72) Inventor: MONTERMINI, Fabio, 41126 Modena (IT); PEPE, Eugenio, 42122 Reggio Nell'Emilia (IT); OLMI, Dante, 41049 Sassuolo (IT); CORRADI, Marco, 42122 Reggio Nell'Emilia (IT)
(74) Representative: DREISS Patentanwälte PartG mbB

(56) References cited:
- WO-A1-2016/097994
- WO-A2-2004/101243
- US-A1- 2003 171 445

## Description

The present invention relates to a machine for producing a foam-in-bag dunnage material according to claim 1.

Foam-in-bag dunnage material is known as a technology where a mixture of a plurality of liquid chemical foam precursor substances is injected into a plastic bag. The liquid chemical foam precursor substances react with each other in the mixture by expanding and building a rather low density foam which, after expansion, hardens. This hardened foam may fill a void volume in a container between the container walls and an article placed inside the container, thus blocking the articles inside the container from moving around and also providing a protecting function against shock movements. EP 2 480 393 B1 discloses a machine for producing a foam-in-bag dunnage material. WO 2004/101243 A2 relates to a dispensing system with a mixing module of foam precursor substances. US 2003/0171445 A1 discloses a process for producing flexible polyurethane foam. WO 2016/097994 A1 discloses a system for the simultaneous injection of a filling material into a plurality of separate chambers of a boat.

It is an object of the present invention to provide a machine for producing a foam-in-bag dunnage material being more flexible to use.

According to the invention this object is solved by a machine for producing a foam-in-bag dunnage material with the features of claim 1. Further embodiments of the invention are given in the dependent claims.

A major advantage of the invention is that the inventive machine allows to have two separate mixing chambers, which are supplied with the same foam precursor substances from the same foam precursor supplies, which allows to produce first and second mixtures at first and second locations with one machine and, if desired, at the same time, and/or to produce first and second mixtures having different properties with one machine and, if desired, at the same time, and/or to produce first and second mixtures by way of different operating principles, for example automatically/semi-automatically and manually. The inventive machine therefore can be adapted easily to the specific application needs of a specific packaging environment. With the inventive machine a number of important functional elements can be shared for the production of the first and second mixtures, which reduces the costs compared to two separate machines.

More specifically, the inventive machine for producing a foam-in-bag dunnage material comprises first and second foam precursor inlets for first and second foam precursor substances. These inlets may be formed in an interface device, and they may be formed for example as releasable fluid connectors. The first and second foam precursor substances may be liquid. Examples for such foam precursor substances are Isocyanate and Polyol.

The inventive machine further comprises a first mixing chamber for mixing the first and second foam precursor substances into a first mixture, the first mixing chamber being fluidly connected to the first and second foam precursor inlets. A first dispenser is fluidly connected to the first mixing chamber, and in most cases will be arranged directly adjacent to the first mixing chamber. The reason is that when the first and second foam precursor substances are mixed to the first mixture, the substances immediately start to react with each other such that gas bubbles are created. It is therefore advantageous if the first mixture is dispensed immediately after being created.

The machine comprises a branch-off-device fluidly arranged upstream of the first mixing chamber, preferably between the first and second foam precursor inlets and the first mixing chamber. This branch-off-device serves functionally as a fluid divider allowing the first and second foam precursor substances to flow into at least two different fluid branches. The flow divider may be a manifold without control on how to divide the stream. For this purpose, the branch-off-device comprises first and second foam precursor outlets towards the first mixing chamber and third and fourth foam precursor outlets towards a second mixing chamber, preferably towards an interface device being adapted to fluidly connect to the second mixing chamber. While the first and third foam precursor outputs are in fluid connection with the first foam precursor inlet, the second and fourth foam precursor outputs are in fluid connection with the second foam precursor inlet. Typically, the branch-off-device comprises two Y-connectors.

The interface device which is fluidly connected to the third and fourth foam precursor outputs is adapted to fluidly connect to a second mixing chamber for mixing the first and second foam precursor substances into a second mixture. As has been mentioned above, this second mixing chamber may be arranged at a different location than the first mixing chamber, may be structured differently than the first mixing chamber such that the second mixture is different than the first mixture, or may be used according to an operation principle which is different from the operation principle of the first mixing chamber.

The machine also comprises a controller for at least temporarily controlling at least some aspects of the operation of the machine. This provides for a smart, safe and efficient operation of the machine. The controller may comprise a microprocessor and a data storage for storing program code to be executed by the microprocessor. By way of example, the controller may be or comprise a computer.

The controller is programmed such that the machine can be operated either only with the first mixing chamber or simultaneously with the first and the second mixing chamber, or the controller being programmed such that the machine can be operated either only with the second mixing chamber or simultaneously with the first and the second mixing chamber, or the controller being programmed such that the machine can be operated either only with the first mixing chamber or only with the second mixing chamber or simultaneously with the first and the second mixing chamber. Typically, the controller may control the amount and the relation of quantities of first and second foam precursor substances pumped to the first and second foam precursor inlets. The possibility to either manually or automatically select different modes of operation, the amount of first and second foam precursor substances, and the relation of quantities of the first and second foam precursor substances allows to precisely control the operation according to the specific needs of the packaging situation.

The first dispenser is fixedly connected to a frame of the machine, and the machine comprises a bag supply for supplying a bag to a position close to the first dispenser, the first dispenser being close to the first dispenser, the first dispenser being adapted to automatically dispense the first mixture into the bag, if desired. Such an arrangement is typical for the automatic or semi-automatic and stationary production of bags, which are then removed from the machine manually by a user and moved to a packaging site, where a bag may be placed manually into a container. The first mixture then may further expand and hereby gradually fill the void between an article and an inner wall of the container and finally at least partially conform to the shape of the article to be packaged. Preferably, the machine comprises a sealing means which automatically seals the bag filled with the first mixture prior to being grasped by a user and moved to the packaging site.

The machine comprises a handheld dispensing assembly comprising the second mixing chamber. Such an arrangement is typical for the "manual" production of foam-in-place dunnage material. For example, the empty bag may be arranged in the container, and then the handheld dispensing assembly may be moved manually by user to a fill opening of the bag. Thereafter, a quantity of the second mixture may be filled into the bag corresponding to the individual geometric situation, in particular depending on the size and/or the shape of the void to be filled, as desired by a user. Another typical application of an handheld dispensing assembly is to dispense the foam directly into the container, where the item to be packed has been previously enveloped in a protective film.

In a further embodiment thereto, the handheld dispensing assembly comprises an activating device to be manually operated by a user for dispensing the second mixture. This allows a user to individually and situationally control the amount of the second mixture dispensed by the dispensing device.

In a further embodiment, the machine comprises an input means for inputting commands to the controller by a user. This allows a user for example to easily input the desired mode of operation and/or other data, such as for example the amount of first and/or second mixture to be dispensed by the first dispenser and/or the handheld dispensing assembly. It is to be understood that different input means may be used, such as a keyboard, a touchscreen, a microphone for inputting acoustic information, such as speech, and/or a camera for inputting gestures.

In a further embodiment, the machine comprises an output means for outputting information to a user. This allows a user for example to observe an actual condition of the machine, such as machine settings, mode of operation, quantity of foam precursor substances still available, and so on. The output means preferably comprises a display, but may also comprise other optical indicators, or may comprise an acoustic output means, such as a loudspeaker, for outputting signals and/or speech.

In a further embodiment, the interface device comprises an electrical connecting device for electrically connecting the handheld dispensing assembly to the controller and/or an energy supply. This allows the easy connection of the handheld dispenser assembly to the controller and/or energy supply, especially an electrical power supply. By consequence, the handheld dispenser may be a "smart" and/or "intelligent" dispenser. It is to be understood that the connection to the controller may be made by means of a wire connector, but may also be made by means of wireless data transfer, such as Bluetooth are Wi-Fi or the like.

In a further embodiment, the machine comprises first and second foam precursor supply lines fluidly arranged between the first and second foam precursor inlets and first and second foam precursor supplies, and a heating device for heating the first and second foam precursor substances contained within the first and second foam precursor supply lines. In a further embodiment, the machine comprises third and fourth foam precursor supply lines fluidly arranged between the interface and the second mixing chamber, and a heating device for heating the third and fourth foam precursor substances contained within the third and fourth foam precursor supply lines.

The mentioned heating devices provide for the correct viscosity of the foam precursor substances by heating the foam precursor substances to an appropriate temperature, typically to 50-80°C. In order to provide a desired temperature, one or more temperature sensors may be arranged in the foam precursor supply lines and be connected to a temperature controller, which controls the heating device and/or devices. The foam precursor supply lines may be formed for example by flexible hoses, independent from whether they are equipped with the heating devices or not.

In a further embodiment, the interface device is adapted to releasably fluidly connect to the third and fourth supply lines. This allows the machine according to the invention to be operated easily with or without the second mixing chamber, and also allows for example to easily exchange a specific handheld dispenser assembly against a different specific handheld dispenser assembly.

In a further embodiment, the interface device comprises closure means to releasably and fluid tightly close the interface device when the machine is operated without the third and fourth foam precursor supply lines being connected. Such closure means may be, for example, a simple screw cap for closing the fluid connectors, but also may be for example a valve which may be operated automatically by the controller when it is detected that the third and fourth foam precursor supply lines are removed or which may be operated manually by the user prior to removing the third and fourth foam precursor supply lines. The mentioned closure means increases the operational safety of the machine.

In a further embodiment, the branch-off-device and the interface device are comprised in a common housing. This reduces the size of the machine and allows even to retrofit already existing machines with the technology according to the invention.

It is to be noted that in the present context the terms "first, second, third, and fourth" are not to be understood in a limiting way or as a firm sequence, but rather and simply are used in order to distinguish functionally similar but separate elements and/or regions from each other. It is also to be understood that it is within the scope of the present invention that "fifth, sixth, and so on" functionally similar elements and/or regions may be present or that only third and fourth elements may be present.

The features and the advantages of the invention will be evident from the following description, regarding particular embodiments thereof, which is made as a nonlimiting example with reference to the attached drawings, wherein:
- Figure 1: is a functional block diagram representing functional elements of a machine for producing a foam-in-bag dunnage material in a first operating condition;
- Figure 2: is a perspective view of the machine of figure 1 in the first operating condition;
- Figure 3: is a perspective view similar to figure 2, the machine being in a second operating condition;
- Figure 4: is a perspective view of a handheld dispensing assembly as used in the machine of figures 1 and 2; and
- Figure 5: is a hydraulic functional representation of the machine of figures 1-3.

In the following detailed description and the attached figures functionally equivalent elements and regions may be designated with identical reference signs. Furthermore, for the sake of clarity in the figures not always all reference signs are drawn.

In the figures, a machine for producing a foam-in-bag dunnage material is generally designated with reference numeral 10. It comprises a main arrangement 12. The main arrangement 12 comprises a first interface 14 and a second interface 16.

The machine 10 further comprises a foam precursor supply arrangement 18, which is fluidly connected to the first interface 14, as will be described in more detail further below. Moreover, the machine 10 comprises a handheld dispensing assembly 20, which is fluidly connected to the second interface 16, as will be described in more detail further below.

The foam precursor supply arrangement 18 comprises a first foam precursor supply 22 and a second foam precursor supply 24. The first foam precursor supply 22 comprises a first foam precursor tank 26 and a first foam precursor pump 28. The second foam precursor supply 24 comprises a second foam precursor tank 30 and a second foam precursor pump 32. The first foam precursor tank 26 may be filled with a first foam precursor substance, such as Isocyanate. The second foam precursor tank 30 may be filled with a second foam precursor substance, such as Polyol. Both foam precursor tanks 26 and 30 may be formed for example by respective cylindrical drums.

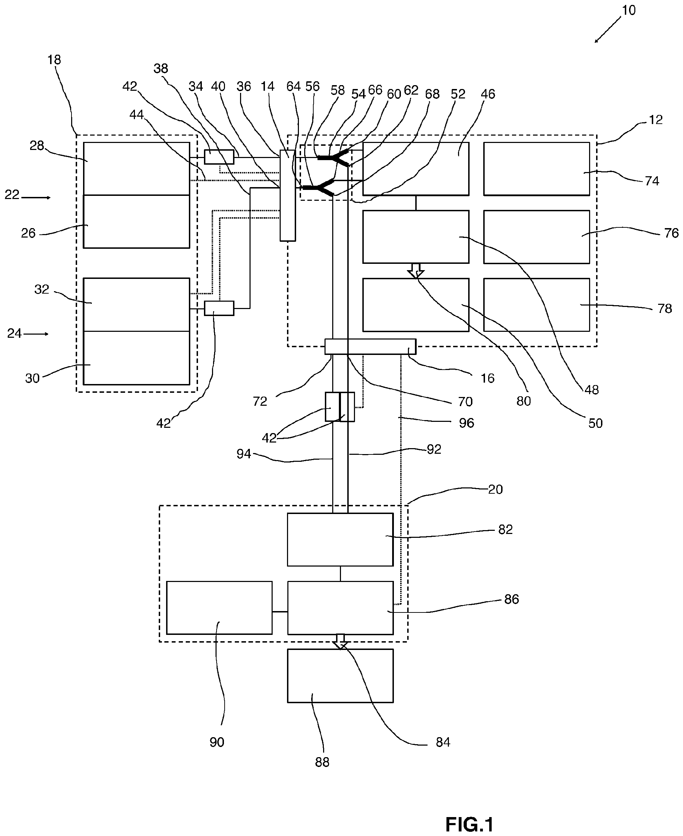

The machine 10 further comprises a first foam precursor supply line 34 which connects an outlet of the first foam precursor pump 28 to a first foam precursor inlet 36 of the first interface 14. Similarly, the machine 10 comprises a second foam precursor supply line 38 which connects an outlet of the second foam precursor pump 32 to a second foam precursor inlet 40 of the first interface 14. Heating devices 42 are provided in both foam precursor supply lines 34 and 38 for heating the first and second foam precursor substances contained within the first and second foam precursor supply lines 34 and 38. As is shown by dotted lines 44 in figure 1, the foam precursor pumps 28 and 32 and the heating devices 42 are also electrically connected to the first interface 14.

The main arrangement 12 of the machine 10 comprises a first mixing chamber 46 for mixing the first and second foam precursor substances into a first mixture, and a first dispenser 48 for dispensing the first mixture into a bag 50. Moreover, the main arrangement 12 comprises a branch-off-device 52 which is fluidly arranged between the first and second foam precursor inlets 36 and 40 and the first mixing chamber 46. The branch-off-device 52 comprises a first Y-channel-arrangement 54 and a second Y-channel-arrangement 56. The first Y-channel-arrangement 54 comprises a first fluid inlet 58 and first and third foam precursor outlets 60 and 62. The second Y-channel-arrangement 56 comprises a second fluid inlet 64 and second and fourth foam precursor outlets 66 and 68.

The first fluid inlet 58 is fluidly connected to the first foam precursor inlet 36. The second fluid inlet 64 is fluidly connected to the second foam precursor inlet 40. The first and second foam precursor outlets 60 and 66 are fluidly connected to the first mixing chamber 46. The third and fourth foam precursor outlets 62 and 68 are fluidly connected to first and second fluid connectors 70 and 72 of the second interface device 16.

The main arrangement 12 of the machine 10 further comprises a controller 74 for controlling at least some aspects of the operation of the machine 10 as well as a combined inputting and outputting means 76 for inputting commands and/or data to the controller 74 and for outputting information to a user. Typically, the controller 74 comprises a microprocessor and a storage means for storing program code which may be executed by the microprocessor. The controller 74 may comprise or be a computer. The combined inputting and outputting means 76 in the present exemplary embodiment is a touchscreen. However, many other types of inputting and/are outputting means may be used, such as a keyboard, a microphone, a loudspeaker, et cetera.

Furthermore, the main arrangement 12 comprises a bag supply 78 which may automatically provide a plastic bag 50 to a position close to the first dispenser 48 when requested by a user such that the first dispenser 48 may dispense automatically or on demand by a user the first mixture (arrow 80 in figure 1) into the plastic bag 50.

The handheld dispensing assembly 20 comprises a second mixing chamber 82 for mixing the first and second foam precursor substances into a second mixture (arrow 84 in figure 1). It further comprises a second dispenser 86 for dispensing the second mixture 84 into a bag 88. The handheld dispensing assembly 20 also comprises an activating device 90 to be manually operated by a user for dispensing the second mixture 84. The handheld dispensing assembly 20 is fluidly connected to the second interface device 16 by means of third and fourth foam precursor supply lines 92 and 94 which are fluidly arranged between the second interface device 16 and the second mixing chamber 82.

A heating device 42 is arranged in the third and fourth foam precursor supply lines 92 and 94 for heating the first and second foam precursor substances contained within the third and fourth foam precursor supply lines 92 and 94. The second interface device 16 is adapted to releasably fluidly connect to the third and fourth foam precursor supply lines 92 and 94. As indicated by dotted lines 96 in figure 1, the handheld dispensing assembly 20 is also releasably electrically connected to the second interface device 16. For this purpose, the second interface device 16 comprises a connecting device (not shown) for electrically connecting the handheld dispensing assembly 20 to the controller 74 and/or an electrical energy supply (not shown). In a preferred embodiment, the fluid connection and the electrical connection from the handheld dispensing assembly 22 to the second interface device 16 may be made simultaneously by means of a combined fluid and electrical connecting device.

The second interface device 16 comprises closure means (not shown) to selectively and fluid tightly close the second interface device 16 when the machine 10 is operated without the third and fourth foam precursor supply lines 92 and 94 being connected. The closure means may be formed by a screw cap or by a valve which may be operated automatically by the controller 74 when the controller 74 detects that the handheld dispensing assembly 20 is removed, or manually by a user.

As has been mentioned, the controller 74 may be programmed in order to control at least temporarily and at least aspects of the operation of the machine 10. For this purpose, the controller 74 may be programmed in different ways:
According to a first aspect, the controller 74 may be programmed such that the machine 10 can be operated either only with the first mixing chamber 46 and the first dispenser 48 in order to dispense the first mixture 80 into a bag 50, or simultaneously with the first mixing chamber 46 as described above and additionally with the second mixing chamber 82 of the handheld dispensing assembly 20, in order to additionally dispense the second mixture 84 by means of the second dispenser 86 into a bag 88, which might for example be arranged already within a container.

According to a second aspect, the controller 74 may be programmed such that the machine 10 can be operated either only with the second mixing chamber 82 as described above or simultaneously with the first mixing chamber 46 and the second mixing chamber 82, both as described above.

According to a third aspect, the controller 74 may be programmed such that the machine 10 can be operated either only with the first mixing chamber 46 as described above or only with the second mixing chamber 82 as described above or simultaneously with the first mixing chamber 46 and the second mixing chamber 82 as described above.

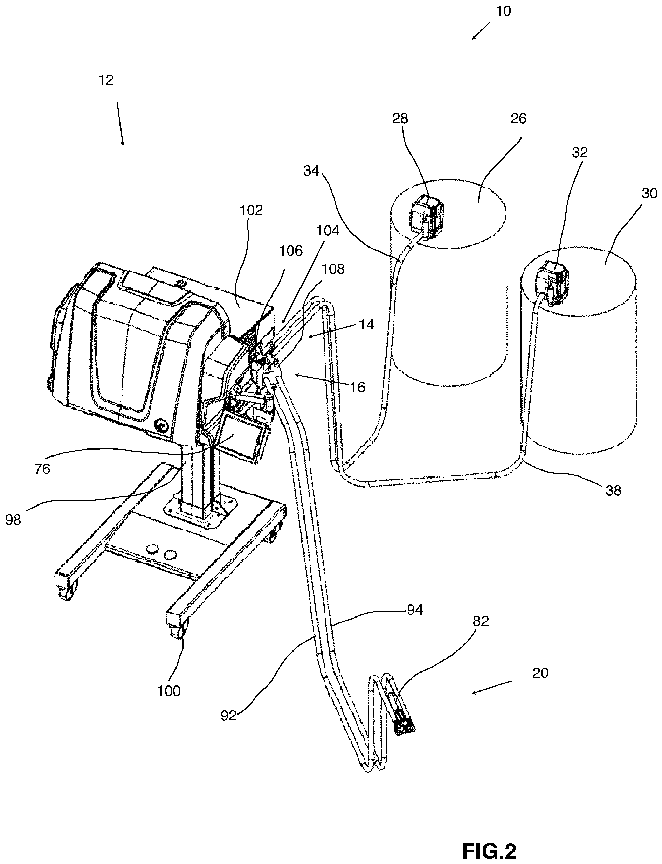

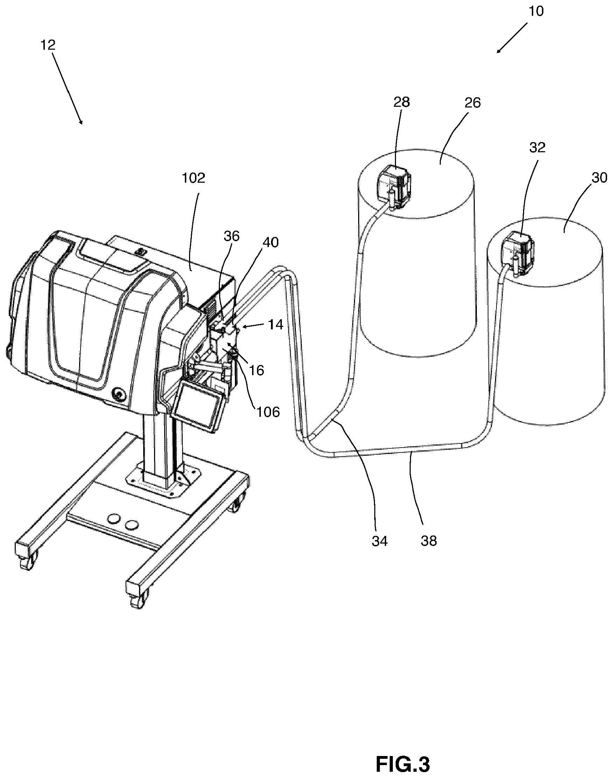

As can be seen from figure 2, the machine 10 comprises a stand 98 which is movable on rollers 100. A frame 102 is attached to the stand 98, the frame 102 fixedly supporting the main arrangement 12. In the specific embodiment of figures 2 and 3, the branch-off-device 52 and the second interface device 16 are comprised in a common housing 104 which is arranged at a lateral portion of the frame 102 and the main arrangement 12.

Preferably, the common housing 104 comprises two manifold blocks 106 and 108. The first manifold block 106 is adapted to connect the first and second foam precursor supply lines 34 and 38 as well as the electrical connection to the heating devices 42, the foam precursor pumps 28 and 32, and so on. Moreover, first manifold block 106 comprises the first and second Y-channel-arrangements 54 and 56 which, in the present exemplary embodiment, may be formed by channels within the first manifold block 106. First manifold block 106 is fixedly mechanically connected to the frame 102 and is also fixedly fluidly connected to the first mixing chamber 46. Its outer lateral area serves as the second interface device 16, while its rear area (in figures 2 and 3) serves as the first interface 14.

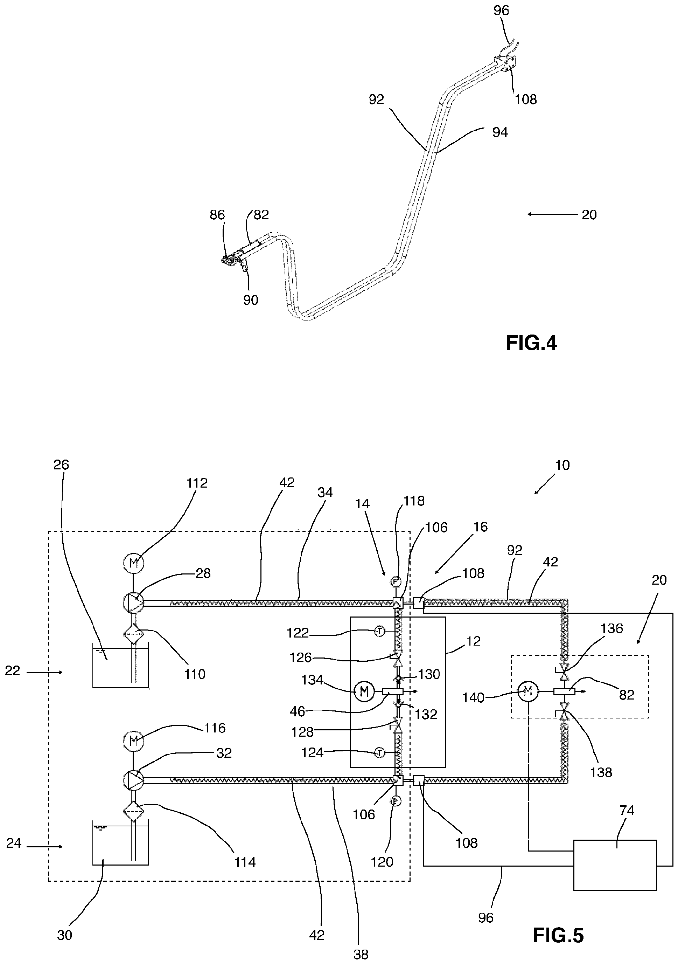

The second manifold block 108 is mechanically and fluidly fixedly connected to the third and fourth foam precursor supply lines 92 and 94 of the handheld dispensing assembly 20, as can been seen from figure 4 which shows solely the handheld dispensing assembly 20 and the components belonging thereto. The second manifold block 108 may be mechanically, fluidly and electrically attached/connected to the first manifold block 106 in case that the machine 10 is to be operated together with the handheld dispensing assembly 20.

Figure 2 shows the machine 10 in a first operating condition with the handheld dispensing assembly 20 and its second mixing chamber 82 connected to the second interface device 16. Figure 3 shows the machine 10 in a second operating condition without the handheld dispensing assembly 20 being connected.

Now the hydraulic principles of the machine 10 will be explained with reference to figure 5. Figure 5 shows the machine 10 in the first operating condition together with the handheld dispensing assembly 20.

The first foam precursor supply 22 comprises the first foam precursor tank 26, a first filter screen 110, and the first foam precursor pump 28, which may be driven by a first pump motor 112. Similarly, the second foam precursor supply 24 comprises the second foam precursor tank 30, a second filter screen 114, and the second foam precursor pump 32, which may be driven by a second pump motor 116.

Within the first manifold block 106, there are provided a first pressure sensor 118 and a second pressure sensor 120 for detecting the liquid pressure of the first and second foam precursor substances. Furthermore, downstream of the first manifold block 106 towards the first mixing chamber 46, there are provided a first temperature sensor 122 and a second temperature sensor 124 for detecting the temperature of the first and second foam precursor substances contained with the first and second foam precursor supply lines 34 and 38. The signals of the sensors 118-124 are provided to the controller 74 which provides appropriate control signals to the pump motors 112 and 116 and the heating devices 42.

Downstream of the first manifold block 106 are provided first and second manually operated valves 126 and 128 as well as check valves 130 and 132. A first dispenser motor 134 is arranged at the first mixing chamber 46 and activated either automatically by the controller 74 or manually/semi-automatically based on an input of the user at the touchscreen 76 in order to dispense the first mixture 18 into the bag 50 (figure 1).

As can be seen from figure 5, the second manifold block 108 is mechanically and fluidly as well as electrically connected to the first manifold block 106. The handheld dispensing assembly 20 comprises third and fourth manually operated valves 136 and 138, which are arranged in the respective third and fourth foam precursor supply lines 92 and 94 close to the second mixing chamber 82. A second dispenser motor 140 is arranged at the second mixing chamber 82 and manually activated by means of the activating device 90 shown in figure 1 in order to dispense the second mixture 84 into the bag 88 (figure 1).

## Claims

1. Machine (10) for producing a foam-in-bag dunnage material, comprising first and second foam precursor inlets (36, 40) for first and second foam precursor substances, a first mixing chamber (46) for mixing the first and second foam precursor substances into a first mixture (80), and a first dispenser (48) for dispensing the first mixture (80), wherein the machine (10) comprises a branch-off-device (52) fluidly arranged upstream of the first mixing chamber (46) and having first and second foam precursor outlets (60, 66) towards the first mixing chamber (46) and third and fourth foam precursor outlets (62, 68) towards a second mixing chamber (82) for mixing the first and second foam precursor substances into a second mixture (84), **characterized in that** the machine (10) comprises a controller (74) for at least temporarily controlling an operation of the machine (10), wherein the controller (74) is programmed such that the machine (10) can be operated either only with the first mixing chamber (46) or simultaneously with the first and the second mixing chamber (46, 82), or the controller (74) being programmed such that the machine (10) can be operated either only with the second mixing chamber (82) or simultaneously with the first and the second mixing chamber (46, 82), or the controller (74) being programmed such that the machine (10) can be operated either only with the first mixing chamber (46) or only with the second mixing chamber (82) or simultaneously with the first and the second mixing chamber (46, 82), wherein the first dispenser (48) is fixedly connected to a frame (102) of the machine (10), and wherein the machine (10) comprises a bag supply (78) for supplying a bag (50) to a position close to the first dispenser (48), the first dispenser (48) being adapted to dispense the first mixture (80) into the bag (50), and wherein it comprises a handheld dispensing assembly (20) comprising the second mixing chamber (82).

2. The machine (10) of claim 1, wherein the handheld dispensing assembly (20) comprises an activating device (90) to be manually operated by a user for dispensing the second mixture (84).

3. The machine (10) of one or more of the preceding claims, wherein it comprises an input means (76) for inputting commands to the controller (74) by a user.

4. The machine (10) of one or more of the preceding claims, wherein it comprises an output means (76) for outputting information to a user.

5. The machine (10) of one or more of the preceding claims, wherein an interface device (16) comprises a connecting device for electrically connecting the handheld dispensing assembly (20) to the controller (74) and/or an energy supply.

6. The machine (10) of one or more of the preceding claims, wherein it comprises first and second foam precursor supply lines (34, 38) fluidly arranged between the first and second foam precursor inlets (36, 40) and first and second foam precursor supplies (22, 24), and a heating device (42) for heating the first and second foam precursor substances contained within the first and second foam precursor supply lines (34, 38).

7. The machine (10) of one or more of the preceding claims, wherein it comprises third and fourth foam precursor supply lines (92, 94) fluidly arranged between an interface (16) and the second mixing chamber (82), and a heating device (42) for heating the first and second foam precursor substances contained within the third and fourth foam precursor supply lines (92, 94).

8. The machine (10) of claim 7, wherein the interface device (16) is adapted to releasably fluidly connect to the third and fourth supply lines (92, 94).

9. The machine (10) of claim 8, wherein it comprises closure means to releasably and fluid tightly close the interface device (16) when the machine (10) is operated without the third and fourth foam precursor supply lines (92, 94) being connected.

10. The machine (10) of one or more of the preceding claims, wherein the branch-off-device (52) and the interface device (16) are comprised in a common housing (104).

11. The machine (10) of one or more of the preceding claims, wherein it comprises a first foam precursor supply (22) comprising a first foam precursor tank (26) and a first foam precursor pump (28) and a second foam precursor supply (24) comprising a second foam precursor tank (30) and a second foam precursor pump (32), the first and second foam precursor pumps (28, 32) being arranged upstream of the branch-off device (52).

## Patentansprüche

1. Maschine (10) zum Herstellen eines Schaum-in-Beutel-Polstermaterials, umfassend einen ersten und einen zweiten Schaumvorläufereinlass (36, 40) für eine erste und eine zweite Schaumvorläufersubstanz, eine erste Mischkammer (46) zum Mischen der ersten und der zweiten Schaumvorläufersubstanz zu einer ersten Mischung (80) und einen ersten Dispenser (48) zum Abgeben der ersten Mischung (80), wobei die Maschine (10) eine Abzweigvorrichtung (52) umfasst, die stromaufwärts von der ersten Mischkammer (46) fluidisch angeordnet ist, und den ersten und den zweiten Schaumvorläuferauslass (60, 66) zu der ersten Mischkammer (46) hin, und den dritten und den vierten Schaumvorläuferauslass (62, 68) zu einer zweiten Mischkammer (82) hin zum Mischen der ersten und der zweiten Schaumvorläufersubstanze zu einer zweiten Mischung (84) aufweist,
**dadurch gekennzeichnet, dass** die Maschine (10) eine Steuerung (74) zum mindestens zeitweisen Steuern eines Betriebs der Maschine (10) umfasst, wobei die Steuerung (74) derart programmiert ist, dass die Maschine (10) entweder nur mit der ersten Mischkammer (46) oder gleichzeitig mit der ersten und der zweiten Mischkammer (46, 82) betrieben werden kann, oder die Steuerung (74) derart programmiert ist, dass die Maschine (10) entweder nur mit der zweiten Mischkammer (82) oder gleichzeitig mit der ersten und der zweiten Mischkammer (46, 82) betrieben werden kann, oder die Steuerung (74) derart programmiert ist, dass die Maschine (10) entweder nur mit der ersten Mischkammer (46) oder nur mit der zweiten Mischkammer (82) oder gleichzeitig mit der ersten und der zweiten Mischkammer (46, 82) betrieben werden kann, wobei der erste Dispenser (48) mit einem Rahmen (102) der Maschine (10) fest verbunden ist, und wobei die Maschine (10) eine Beutelzufuhr (78) zum Zuführen eines Beutels (50) zu einer Position nahe dem ersten Dispenser (48) umfasst, wobei der erste Dispenser (48) angepasst ist, um die erste Mischung (80) in den Beutel (50) abzugeben, und wobei er eine handgeführte Abgabeanordnung (20) umfasst, umfassend die zweite Mischkammer (82).

2. Maschine (10) nach Anspruch 1, wobei die handgeführte Ausgabeanordnung (20) eine Aktivierungsvorrichtung (90) umfasst, die von einem Benutzer zum Abgeben der zweiten Mischung (84) manuell zu bedienen ist.

3. Maschine (10) nach einem oder mehreren der vorstehenden Ansprüche, wobei sie ein Eingabemittel (76) zum Eingeben von Befehlen an die Steuerung (74) durch einen Benutzer umfasst.

4. Maschine (10) nach einem oder mehreren der vorstehenden Ansprüche, wobei sie ein Ausgabemittel (76) zum Ausgeben von Informationen an einen Benutzer umfasst.

5. Maschine (10) nach einem oder mehreren der vorstehenden Ansprüche, wobei eine Schnittstellenvorrichtung (16) eine Verbindungsvorrichtung zum elektrischen Verbinden der handgeführten Abgabeanordnung (20) mit der Steuerung (74) und/oder einer Energieversorgung umfasst.

6. Maschine (10) nach einem oder mehreren der vorstehenden Ansprüche, wobei sie eine erste und eine zweite Schaumvorläuferzufuhrleitung (34, 38), die zwischen dem ersten und dem zweiten Schaumvorläufereinlass (36, 40) und der ersten und der zweiten Schaumvorläuferzufuhr (22, 24) fluidisch angeordnet sind, und eine Heizvorrichtung (42) zum Erhitzen der ersten und der zweiten Schaumvorläufersubstanz, die innerhalb der ersten und der zweiten Schaumvorläuferzufuhrleitung (34, 38) enthalten sind, umfasst.

7. Maschine (10) nach einem oder mehreren der vorstehenden Ansprüche, wobei sie eine dritte und eine vierte Schaumvorläuferzufuhrleitung (92, 94), die zwischen einer Schnittstelle (16) und der zweiten Mischkammer (82) fluidisch angeordnet sind, und eine Heizvorrichtung (42) zum Erhitzen der ersten und der zweiten Schaumvorläufersubstanz, die in der dritten und der vierten Schaumvorläuferzufuhrleitung (92, 94) enthalten sind, umfasst.

8. Maschine (10) nach Anspruch 7, wobei die Schnittstellenvorrichtung (16) angepasst ist, um sich mit der dritten und der vierten Versorgungsleitung (92, 94) lösbar, fluidisch zu verbinden.

9. Maschine (10) nach Anspruch 8, wobei sie Verschlussmittel umfasst, um die Schnittstellenvorrichtung (16) lösbar und fluiddicht zu verschließen, wenn die Maschine (10) betrieben wird, ohne dass die dritte und die vierte Schaumvorläuferzufuhrleitung (92, 94) angeschlossen sind.

10. Maschine (10) nach einem oder mehreren der vorstehenden Ansprüche, wobei die Abzweigvorrichtung (52) und die Schnittstellenvorrichtung (16) in einem gemeinsamen Gehäuse (104) enthalten sind.

11. Maschine (10) nach einem oder mehreren der vorstehenden Ansprüche, wobei sie eine erste Schaumvorläuferversorgung (22) umfasst, umfassend einen ersten Schaumvorläufertank (26) und eine erste Schaumvorläuferpumpe (28), und eine zweite Schaumvorläuferversorgung (24), umfassend einen zweiten Schaumvorläufertank (30) und eine zweite Schaumvorläuferpumpe (32), wobei die erste und die zweite Schaumvorläuferpumpe (28, 32) stromaufwärts von der Abzweigvorrichtung (52) angeordnet sind.

## Revendications

1. Machine (10) pour la production d'un matériau de rembourrage par injection de mousse en sachet, comprenant des première et deuxième entrées de précurseur de mousse (36, 40) pour des première et deuxième substances de précurseur de mousse, une première chambre de mélange (46) pour le mélange des première et deuxième substances de précurseur de mousse en un premier mélange (80), et un premier distributeur (48) pour la distribution du premier mélange (80), dans laquelle la machine (10) comprend un dispositif de ramification (52) agencé de manière fluidique en amont de la première chambre de mélange (46) et ayant des première et deuxième sorties de précurseur de mousse (60, 66) vers la première chambre de mélange (46) et des troisième et quatrième sorties de précurseur de mousse (62, 68) vers une deuxième chambre de mélange (82) pour le mélange des première et deuxième substances de précurseur de mousse en un deuxième mélange (84), **caractérisée en ce que** la machine (10) comprend un dispositif de commande (74) pour au moins temporairement commander un fonctionnement de la machine (10), dans laquelle le dispositif de commande (74) est programmé de sorte que la machine (10) puisse être mise en fonctionnement soit uniquement avec la première chambre de mélange (46), soit simultanément avec la première et la deuxième chambre de mélange (46, 82), ou le dispositif de commande (74) étant programmé de sorte que la machine (10) puisse être mise en fonctionnement soit uniquement avec la deuxième chambre de mélange (82), soit simultanément avec la première et la deuxième chambre de mélange (46, 82), ou le dispositif de commande (74) étant programmé de sorte que la machine (10) puisse être mise en fonctionnement soit uniquement avec la première chambre de mélange (46), soit uniquement avec la deuxième chambre de mélange (82), soit simultanément avec la première et la deuxième chambre de mélange (46, 82), dans laquelle le premier distributeur (48) est raccordé de manière fixe à un bâti (102) de la machine (10), et dans laquelle la machine (10) comprend une alimentation en sachets (78) pour l'alimentation d'un sachet (50) jusqu'à une position proche du premier distributeur (48), le premier distributeur (48) étant conçu pour distribuer le premier mélange (80) dans le sachet (50), et dans laquelle elle comprend un ensemble de distribution portatif (20) comprenant la deuxième chambre de mélange (82) .

2. Machine (10) selon la revendication 1, dans laquelle l'ensemble de distribution portatif (20) comprend un dispositif d'activation (90) devant être manuellement mis en fonctionnement par un utilisateur pour la distribution du deuxième mélange (84).

3. Machine (10) selon l'une ou plusieurs des revendications précédentes, dans laquelle elle comprend un moyen d'entrée (76) pour l'entrée d'instructions dans le dispositif de commande (74) par un utilisateur.

4. Machine (10) selon l'une ou plusieurs des revendications précédentes, dans laquelle elle comprend un moyen de sortie (76) pour la sortie d'informations vers un utilisateur.

5. Machine (10) selon l'une ou plusieurs des revendications précédentes, dans laquelle un dispositif d'interface (16) comprend un dispositif de raccordement pour le raccordement électrique de l'ensemble de distribution portatif (20) au dispositif de commande (74) et/ou à une alimentation en énergie.

6. Machine (10) selon l'une ou plusieurs des revendications précédentes, dans laquelle elle comprend des première et deuxième conduites d'alimentation en précurseur de mousse (34, 38) agencées de manière fluidique entre les première et deuxième entrées de précurseur de mousse (36, 40) et les première et deuxième alimentations en précurseur de mousse (22, 24), et un dispositif de chauffage (42) pour le chauffage des première et deuxième substances de précurseur de mousse contenues au sein des première et deuxième conduites d'alimentation en précurseur de mousse (34, 38).

7. Machine (10) selon l'une ou plusieurs des revendications précédentes, dans laquelle elle comprend des troisième et quatrième conduites d'alimentation en précurseur de mousse (92, 94) agencées de manière fluidique entre une interface (16) et la deuxième chambre de mélange (82), et un dispositif de chauffage (42) pour le chauffage des première et deuxième substances de précurseur de mousse contenues au sein des troisième et quatrième conduites d'alimentation en précurseur de mousse (92, 94).

8. Machine (10) selon la revendication 7, dans laquelle le dispositif d'interface (16) est conçu pour se raccorder de manière libérable et fluidique aux troisième et quatrième conduites d'alimentation (92, 94).

9. Machine (10) selon la revendication 8, dans laquelle elle comprend un moyen de fermeture pour fermer de manière libérable et étanche aux fluides le dispositif d'interface (16) lorsque la machine (10) est mise en fonctionnement sans que les troisième et quatrième conduites d'alimentation en précurseur de mousse (92, 94) ne soient raccordées.

10. Machine (10) selon l'une ou plusieurs des revendications précédentes, dans laquelle le dispositif de ramification (52) et le dispositif d'interface (16) sont compris dans un boîtier commun (104).

11. Machine (10) selon l'une ou plusieurs des revendications précédentes, dans laquelle elle comprend une première alimentation en précurseur de mousse (22) comprenant un premier réservoir de précurseur de mousse (26) et une première pompe de précurseur de mousse (28) et une deuxième alimentation en précurseur de mousse (24) comprenant un deuxième réservoir de précurseur de mousse (30) et une deuxième pompe de précurseur de mousse (32), les première et deuxième pompes de précurseur de mousse (28, 32) étant agencées en amont du dispositif de ramification (52).
